# EUROPÄISCHE PATENTSCHRIFT

(11) **EP 4 054 790 B1**
(45) Veröffentlichungstag und Bekanntmachung des Hinweises auf die Patenterteilung: **11.06.2025**
(21) Anmeldenummer: 20799974.9
(22) Anmeldetag: 29.09.2020
(51) Int. Cl.: B23Q 1/00

(54) **WERKZEUGLOS RÜSTBARE RUNDSCHALTTISCHANORDNUNG**
ROTARY INDEXING TABLE ASSEMBLY THAT CAN BE SET UP WITHOUT TOOLS
ENSEMBLE TABLE À TRANSFERT CIRCULAIRE POUVANT ÊTRE MIS EN PLACE SANS OUTIL

(30) Priorität: 07.11.2019 DE 102019130033
(43) Veröffentlichungstag der Anmeldung: 14.09.2022
(73) Patentinhaber: Schaeffler Technologies AG & Co. KG, 91074 Herzogenaurach (DE)
(72) Erfinder: VOLK, Wolfgang, 96158 Frensdorf (DE)
(86) Internationale Anmeldenummer: PCT/DE2020/100832
(87) Internationale Veröffentlichungsnummer: WO 2021/089078

(56) Entgegenhaltungen:
- EP-A1- 1 442 832
- CN-A- 109 623 416
- JP-A- S62 255 042

## Beschreibung

Die Erfindung betrifft eine werkzeuglos rüstbare Rundschalttischanordnung mit einem Druckbolzenverschluss. Eine solche Rundschalttischanordnung ist aus der CN 109 623 416 A bekannt.

Bei vorbekannten Rundschalttischanordnungen verursachen das Lösen und spätere Festschrauben von Schrauben beim Rüsten einer Rundschalttischanordnung einen erheblichen Zeitaufwand. Hierzu ist ein jeweiliges Drehmittel üblicherweise mit einer Aufnahmeanordnung verschraubt. Dies erfordert ein zusätzliches Werkzeug. Konkreter formuliert bedeutet dies, dass das zusätzliche Werkzeug zum Umrüsten der Rundschalttischanordnung verwendet wird, um eine oder mehrere Schrauben zu lösen beziehungsweise zu verschrauben. Dies kostet einerseits Zeit, um das Werkzeug von seinem Lagerplatz zu beschaffen und die entsprechenden Montageschritte durchzuführen. Andererseits muss das Werkzeug mit damit verbundenen Kosten beschafft werden und anschließend griffbereit gelagert werden. Aufgabe der Erfindung ist es, eine Rundschalttischanordnung zu ermöglichen, die ein Rüsten beziehungsweise Umrüsten vereinfacht beziehungsweise beschleunigt.

Die Lösung der Aufgabe erfolgt erfindungsgemäß durch eine Rundschalttischanordnung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Demnach ist die Aufgabe gelöst durch eine Rundschalttischanordnung mit einer Drehachse, aufweisend
ein um die Drehachse drehbares Drehmittel mit einer zur Drehachse koaxialen Zentrieröffnung;
eine Aufnahmeanordnung mit einer Bolzenanordnung,
wobei die Bolzenanordnung aufweist einen entlang der Drehachse mit einem Federsystem bewegbaren Bolzenkörper, der derart in einen Rüstzustand oder einen Sperrzustand einstellbar ist,
dass das Drehmittel im Rüstzustand lösbar mit der Aufnahmeanordnung verbunden ist, und
dass das Drehmittel im Sperrzustand unlösbar mit der Aufnahmeanordnung verbunden ist,und dass der Bolzenkörper der Bolzenanordnung die Zentrieröffnung durchdringt.

Nachfolgend werden die Grundidee der Erfindung und einzelne bevorzugte Aspekte des beanspruchten Erfindungsgegenstandes erläutert und weiter nachfolgend bevorzugte modifizierte Ausführungsformen der Erfindung beschrieben. Erläuterungen, insbesondere zu Vorteilen und Definitionen von Merkmalen, sind dem Grunde nach beschreibende und bevorzugte, jedoch nicht limitierende Beispiele. Sofern eine Erläuterung limitierend ist, wird dies ausdrücklich erwähnt.

Grundidee der vorliegenden Erfindung ist es also, dass durch die Ausgestaltung des Bolzenkörpers als entlang einer Hubbewegung bewegliches Element die Notwendigkeit einer Schraubverbindungsanordnung entfällt, also mindestens einer oder mehrerer Schrauben, zum Fixieren beziehungsweise Klemmen der Rundschalttischanordnung. Besonders bevorzugt sieht die Erfindung zur Lösung der Aufgabe stattdessen vor, dass die Rundschalttischanordnung ein um eine Drehachse drehbares Drehmittel mit einer Zentrieröffnung und eine Aufnahmeanordnung mit einer Bolzenanordnung aufweist, wobei das Drehmittel und die Aufnahmeanordnung per Druckbolzenverschluss miteinander montierbar beziehungsweise verbindbar sind. Zur Montage wird das Drehmittel derart von oben auf die Aufnahmeanordnung angefügt, dass die Bolzenanordnung die Zentrieröffnung durchdringt. Weiterhin weist die Aufnahmeanordnung ein Widerlagermittelsystem mit einem oder mehreren Widerlagermittel auf, wobei mindestens ein Widerlagermittel radial zur Drehachse beweglich ist. Das Drehmittel weist koaxial zur Zentrieröffnung ein Widerlagersystem auf. Insbesondere können das oder die Widerlagermittel zwei Zustände aufweisen, um mit dem Widerlagersystem wechselzuwirken, nämlich einen Sperrzustand und einen Rüstzustand. Ob das oder die Widerlagermittel im Sperrzustand oder im Rüstzustand sind, kann insbesondere durch eine Hubbewegung der Bolzenanordnung entlang der Drehachse eingestellt werden.

Rundschalttischanordnungen werden sowohl in der spanenden Bearbeitung in Werkzeugmaschinen als auch in der nichtspanenden Automatisierung eingesetzt.

Die Rundschalttischanordnungen unterscheiden sich je nach Verwendung sowohl in den Bauformen als auch in den Genauigkeiten und der Steifigkeit. In der spanenden Bearbeitung sind die Anforderungen an die Genauigkeit und Steifigkeit höher als im nichtspanenden Bereich. In der Automatisierung werden kürzeste Schaltzeiten gefordert. Weiterhin wichtig sind kurze Rüstzeiten, die durch die Erfindung ermöglicht werden.

Dass das Drehmittel lösbar beziehungsweise unlösbar mit der Aufnahmeanordnung verbunden ist, betrifft insbesondere die axiale Bewegbarkeit des Drehmittels zur Aufnahmeanordnung entlang der Drehachse während des Betriebs der Rundschalttischanordnung.

Insbesondere können die Widerlagermittel auf einer zur Drehachse senkrechten Projektionsebene, bevorzugt mit ihren Mittelpunkten einen Projektionskreis bildend, angeordnet sein. Dies bewirkt eine möglichst gleichmäßige Lastverteilung und reduziert singulären Verschleiß beziehungsweise vergleichmäßigt die Abnutzung der Komponenten.

Weiterhin insbesondere können die Widerlagermittel als Kugelkörper ausgebildet sein. Durch ein Betätigen, also Drücken, des Bolzenkörpers können die Widerlagermittel entriegelt oder fixiert werden, sodass das Drehmittel im Sperrzustand oder im Rüstzustand ist.

Insbesondere ist vorgesehen, dass nach dem Loslassen des Bolzenkörpers, dieser durch die Federkraft des Federsystems wieder nach oben geschoben wird und die Widerlagermittel, beispielsweise Kugeln, werden durch eine Verjüngung am Bolzenkörper wieder nach außen gedrückt. Somit ist die Rundschalttischanordnung verriegelt und das Drehmittel kann nicht mehr unkontrolliert nach oben abgezogen werden.

Die Widerlagermittel, beispielsweise Kugeln, drücken beim Verriegeln auf eine umlaufende Schräganordnung, beispielsweise als Kante beziehungsweise Nut oder Nuten ausgebildet, des Drehmittels. Die eingeleitete Querkraft über die Kugeln erzeugt eine Rastwirkung am Drehmittel und fixiert dieses dadurch nach unten. Gegen die Verdrehung des Drehmittels sind ein oder mehrere Arretiermittel vorgesehen.

Die Aufnahmeanordnung weist somit als Widerlagermittel beispielsweise eine oder mehrere Kugeln auf, welche durch den Bolzenkörper von innen nach außen gedrückt werden. Die Kugeln sind in einem Widerlagermittelsystem in entsprechende Ausnehmungen einer Zentralanordnung anzuordnen.

Weiterhin können an der Aufnahmeanordnung ein oder mehrere Arretiermittel, insbesondere als Schwertstifte, angeordnet sein. Somit wird sichergestellt, dass sich das Drehmittel nicht unkontrolliert gegenüber der Aufnahmeanordnung verdrehen kann.

Erfindungsgemäß ist vorgesehen, dass der Bolzenkörper der Bolzenanordnung die Zentrieröffnung durchdringt, wobei der Bolzenkörper der Bolzenanordnung und die Zentrieröffnung insbesondere koaxial zueinander angeordnet sind. Die Zentrierung beschleunigt die Montage und reduziert durch das genaue Aufbringen des Drehmittels das Risiko einer versetzten Verbindung zwischen Drehmittel und Aufnahmeanordnung.

Gemäß einer bevorzugten Ausführungsform der Erfindung ist vorgesehen, dass der Bolzenkörper den Rüstzustand durch eine axiale Bewegung in Richtung der Rundschalttischanordnung einnimmt und dass der Bolzenkörper den Sperrzustand durch eine axiale Bewegung entgegen der Richtung der Rundschalttischanordnung einnimmt, wobei das Federsystem den Bolzenkörper vorzugsweise in den Sperrzustand presst. Anders formuliert wechseln Rüstzustand und Sperrzustand durch eine Hubbewegung des Bolzenkörpers. Dies ermöglicht eine einfache Montage mit einem nur geringen Verletzungsrisiko. Ein wesentlicher Vorteil ist zudem, dass die Montage sehr schnell und ohne verschleißende Verbindungsmittel, etwa Schrauben, erfolgt.

Gemäß einer bevorzugten Ausführungsform der Erfindung ist vorgesehen, dass der Bolzenkörper mindestens zwei unterschiedliche Außendurchmesser aufweist, wobei der entlang der Drehachse von der Rundschalttischanordnung entfernte erste Außendurchmesser kleiner als der entlang der Drehachse zu der Rundschalttischanordnung weisende zweite Außendurchmesser,
und dass die Aufnahmeanordnung ein Widerlagermittelsystem aufweist mit einer zur Drehachse koaxialen Zentralanordnung, die umfangsgemäß eine oder mehrere Ausnehmungen aufweist, wobei die Ausnehmungen zur Drehachse radial nach außen einen geringeren Durchschnitt aufweisen als in einem radial inneren Abschnitt, und wobei eine oder mehrere Ausnehmungen jeweils mindestens ein Widerlagermittel aufweisen,
wobei die Widerlagermittel im Sperrzustand des Bolzenkörpers durch den zweiten Außendurchmesser des Bolzenkörpers radial nach außen gepresst sind und im Rüstzustand des Bolzenkörpers im Abschnitt des ersten Außendurchmessers des Bolzenkörpers radiales Spiel aufweisen. Die Komponenten lassen sich kostengünstig herstellen und ermöglichen zudem einen zuverlässigen und gleichzeitig verschleißarmen Betrieb der Rundschalttischanordnung. Die Widerlagermittel können unterschiedlich ausgebildet sein, wobei Kugelkörper bevorzugt sind. Der Bolzenkörper hat somit mindestens zwei Außendurchmesser. Diese beiden Außendurchmesser können beispielsweise über einen konischen Verbindungsabschnitt ineinander übergehen. Dabei kann es sein, dass die Widerlagermittel zwischen einem Außendurchmesser und dem anderen Außendurchmesser oder zwischen einem Außendurchmesser und dem konischen Verbindungsabschnitt zwischen dem Sperrzustand und dem Rüstzustand wechseln.

Gemäß einer bevorzugten Ausführungsform der Erfindung ist vorgesehen,
dass das Drehmittel koaxial zur Zentrieröffnung ein Widerlagersystem aufweist, das den Bolzenkörper zumindest teilweise umgibt, sodass ein oder mehrere Widerlagermittel im Sperrzustand des Bolzenkörpers derart durch den zweiten Außendurchmesser des Bolzenkörpers radial nach außen gepresst sind, dass sie mit dem Widerlagersystem des Drehmittels verspannen und das Drehmittel fixieren. Hierbei handelt es sich um ein einfach einstellbares, zuverlässiges und verschleißarmes System. Das Drehmittel wird verspannt und somit gegen ein ungewolltes Herauslösen während des Betriebs, also nach dem abgeschlossenen Rüsten, gesichert.

Gemäß einer bevorzugten Ausführungsform der Erfindung ist vorgesehen,
dass das Widerlagersystem als zumindest teilweise, vorzugsweise vollständig, umlaufende Schräganordnung ausgebildet ist. Schräganordnung bedeutet, dass das Widerlagersystem entlang Drehachse radial größer werdend verläuft, beziehungsweise in andere Richtung der Drehachse radial kleiner werdend.

Gemäß einer bevorzugten Ausführungsform der Erfindung ist vorgesehen,
dass das eine oder mehrere Widerlagermittel als Kugelkörper ausgebildet ist oder sind. Kugelkörper haben den Vorteil, dass sie kostengünstig herstellbar sind und zudem eine möglichst verschleißarme Anwendung ermöglichen. Regelmäßiges Rüsten, also Wechseln von Rüstzustand und Sperrzustand ist damit unproblematisch für die Rundschalttischanordnung. Insbesondere reduzieren sie das Risiko eines Verkantens.

Gemäß einer bevorzugten Ausführungsform der Erfindung ist vorgesehen,
dass die Aufnahmeanordnung ein oder mehrere Arretiermittel aufweist, um ein unkontrolliertes Komponentenverdrehen um die Drehachse zu vermeiden. Somit wird sichergestellt, dass sich das Drehmittel nicht gegenüber der Aufnahmeanordnung verdrehen kann.

Nachfolgend wird die Erfindung unter Bezugnahme auf die anliegenden Zeichnungen anhand bevorzugter Ausführungsbeispiele exemplarisch erläutert. Es zeigen:
Fig. 1: eine perspektivische Ansicht auf eine Rundschalttischanordnung gemäß einer bevorzugten Ausführungsform der Erfindung, wobei ein Drehmittel von einer Aufnahmeanordnung entfernt dargestellt ist;
Fig. 2: die perspektivische Ansicht der Rundschalttischanordnung nach Figur 1, wobei das Drehmittel mit der Aufnahmeanordnung verbunden dargestellt ist;
Fig. 3: eine ausschnittweise Schnittansicht der Rundschalttischanordnung nach Figur 2;
Fig. 4: eine Schnittansicht der Aufnahmeanordnung nach Figur 3;
Fig. 5: eine teilweise Schnittansicht und teilweise perspektivische Ansicht der Aufnahmeanordnung nach Figur 4, eingelassen in der Rundschalttischanordnung;
Fig. 6: eine Schnittansicht der Rundschalttischanordnung nach Figur 4, eingelassen in der Rundschalttischanordnung;
Fig. 7: eine perspektivische Ansicht einer Rundschalttischanordnung nach Stand der Technik; und
Fig. 8: eine Schnittansicht einer Rundschalttischanordnung nach Figur 7.

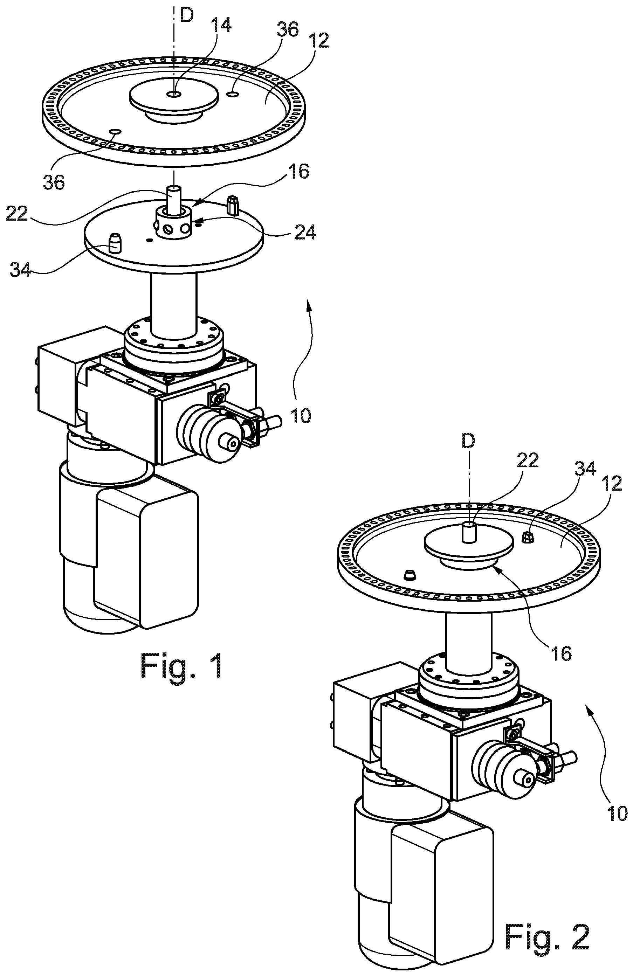

Die Figuren 1 und 2 zeigen eine perspektivische Ansicht einer Rundschalttischanordnung 10 mit einer Drehachse D, aufweisend ein um die Drehachse D drehbares Drehmittel 12 mit einer zur Drehachse D koaxialen Zentrieröffnung 14 und eine Aufnahmeanordnung 16 mit einer Bolzenanordnung 18. Dabei zeigt Figur 1 eine Explosionsdarstellung und Figur 2 eine zusammengesetzte Darstellung. Die Explosionsdarstellung kann auch interpretiert werden als Schritt während des Rüstens, also nachdem das Drehmittel 12 von der Aufnahmeanordnung 16 entfernt wurde beziehungsweise bevor das Drehmittel 12 auf die Aufnahmeanordnung 16 gesetzt wird.

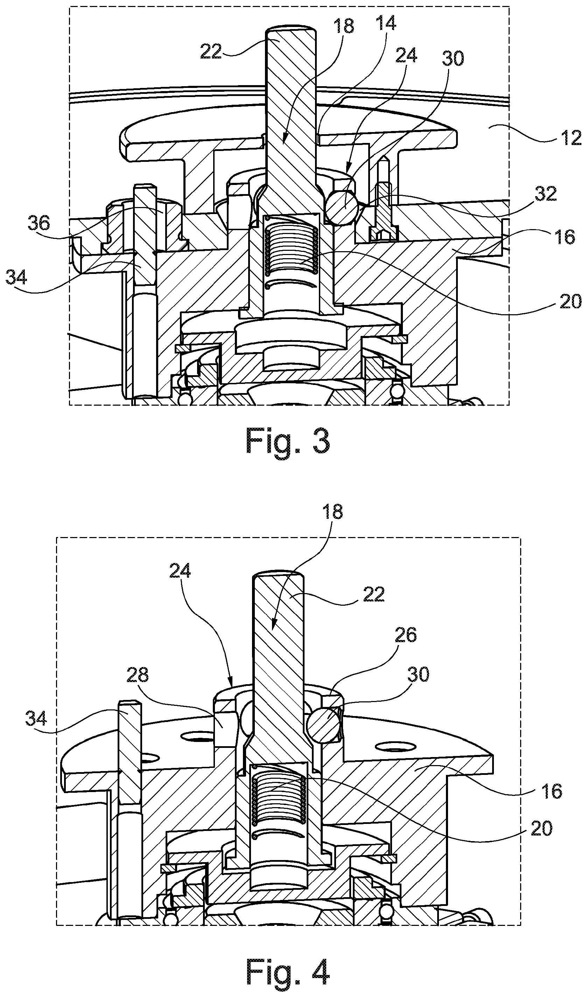

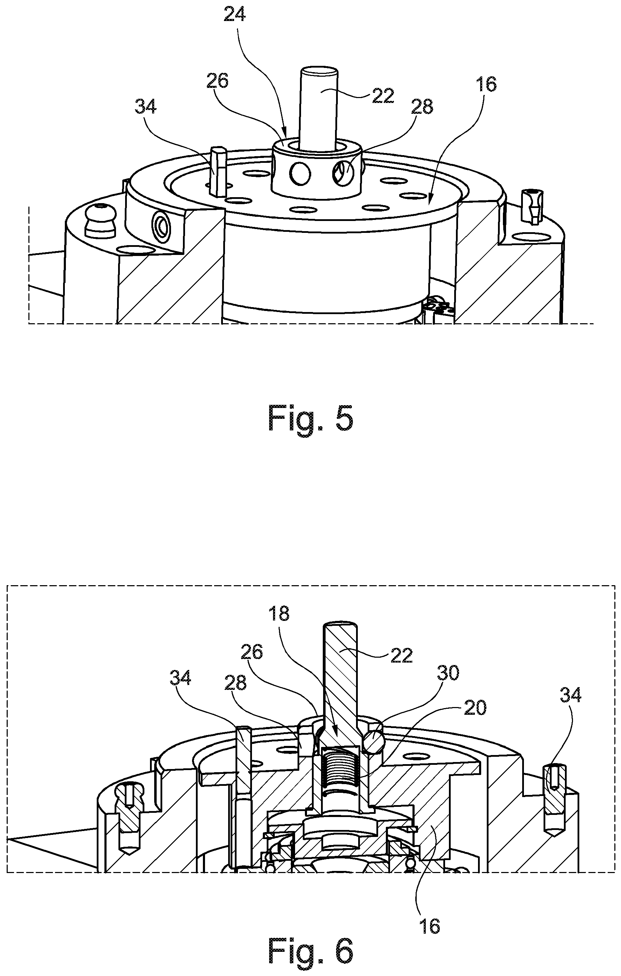

Die Bolzenanordnung 18 weist auf einen entlang der Drehachse D mit einem Federsystem 20 bewegbaren Bolzenkörper 22, der derart in einen Rüstzustand oder einen Sperrzustand einstellbar ist,
dass das Drehmittel 12 im Rüstzustand lösbar mit der Aufnahmeanordnung 16 verbunden ist, und
dass das Drehmittel 12 im Sperrzustand unlösbar mit der Aufnahmeanordnung 16 verbunden ist. Besser erkennbar ist dies in den Figuren 3 bis 6.

Insbesondere in Figur 3 gut erkennbar ist vorgesehen, dass der Bolzenkörper 22 der Bolzenanordnung 18 die Zentrieröffnung 14 durchdringt, wobei der Bolzenkörper 22 der Bolzenanordnung 18 und die Zentrieröffnung 14 insbesondere koaxial zueinander angeordnet sind.

Die Zentrieröffnung 14 kann einstückiger Bestandteil des Drehmittels 12 sein oder an einem mit dem Drehmittel 12 verbindbaren Element angeordnet sein. Dies ist typenspezifisch zu bestimmen.

Bevorzugt ist vorgesehen, dass der Bolzenkörper 22 den Rüstzustand durch eine axiale Bewegung in Richtung der Rundschalttischanordnung 10 einnimmt und dass der Bolzenkörper 22 den Sperrzustand durch eine axiale Bewegung entgegen der Richtung der Rundschalttischanordnung 10 einnimmt, wobei das Federsystem 20 den Bolzenkörper 22 vorzugsweise in den Sperrzustand presst.

Der Sperrzustand ist beispielsweise eingestellt nach Figur 2 und insbesondere erkennbar in Figur 3.

Demgegenüber befindet sich der Bolzenkörper 22 nach Figur 1 im Rüstzustand. Gut erkennbar ist dies in den Figuren 4 bis 6.

Besonders bevorzugt ist, dass der Bolzenkörper 22 mindestens zwei unterschiedliche Außendurchmesser aufweist, wobei der entlang der Drehachse D von der Rundschalttischanordnung 10 entfernte erste Außendurchmesser, also der obere Außendurchmesser, kleiner als der entlang der Drehachse D zu der Rundschalttischanordnung 10 weisende zweite Außendurchmesser, also der untere Außendurchmesser. Gut erkennbar ist dies insbesondere in Figur 3 im Sperrzustand beziehungsweise in Figur 4 im Rüstzustand.

Dabei weist die Aufnahmeanordnung 16 ein Widerlagermittelsystem 24 mit einer zur Drehachse D koaxialen Zentralanordnung 26 auf, die umfangsgemäß eine oder mehrere Ausnehmungen 28 aufweist, wobei die Ausnehmungen 28 zur Drehachse D radial nach außen einen geringeren Durchschnitt aufweisen als in einem radial inneren Abschnitt, und wobei eine oder mehrere Ausnehmungen 28 jeweils mindestens ein Widerlagermittel 30 aufweisen.

Gemäß Figur 3 werden die Widerlagermittel 30 im Sperrzustand des Bolzenkörpers 22 durch den zweiten Außendurchmesser des Bolzenkörpers 22 radial nach außen gepresst.

Gemäß Figur 4 weisen die Widerlagermittel 30 im Rüstzustand des Bolzenkörpers 22 im Abschnitt des ersten Außendurchmessers des Bolzenkörpers 22 radiales Spiel auf. Radiales Spiel ist bezogen auf eine zur Drehachse D senkrechte Projektionsebene beziehungsweise auf einen zur Drehachse D senkrechten Projektionskreis. Entlang dieses Projektionskreises sind die Widerlagermittel 30 im Rüstzustand zumindest teilweise in radialer Orientierung zur Drehachse D beweglich.

Unabhängig einer bestimmten Ausführungsform kann vorgesehen sein, dass zwischen zwei Außendurchmessern des Bolzenkörpers 22, bevorzugt nach der vorgenannten Beschreibung, eine Verjüngung derart angeordnet ist, dass die Widerlagermittel 30 bei einer Hubbewegung des Bolzenkörpers 22 ohne zu verkanten geschoben beziehungsweise gepresst werden. Insbesondere kann die Verjüngung auch den zweiten Außendurchmesser umfassen.

In Figur 3 gut erkennbar ist bevorzugt, dass das Drehmittel 12 koaxial zur Zentrieröffnung 14 ein Widerlagersystem 32 aufweist, das den Bolzenkörper 22 zumindest teilweise umgibt, sodass ein oder mehrere Widerlagermittel 30 im Sperrzustand des Bolzenkörpers 22 derart durch den zweiten Außendurchmesser des Bolzenkörpers 22 radial nach außen gepresst sind, dass sie mit dem Widerlagersystem 32 des Drehmittels 12 verspannen und das Drehmittel 12 fixieren.

Wie in Figur 3 optional dargestellt, ist das Widerlagersystem 32 als zumindest teilweise, vorzugsweise vollständig, umlaufende Schräganordnung ausgebildet.

Die Figuren 2, 3 und 6 offenbaren beispielhaft, dass das eine oder mehrere Widerlagermittel 30 als Kugelkörper ausgebildet ist beziehungsweise sind.

Weiterhin ist bevorzugt, dass die Aufnahmeanordnung 16 ein oder mehrere Arretiermittel 34 aufweist, um ein unkontrolliertes Komponentenverdrehen um die Drehachse D zu vermeiden. Dementsprechend weist das Drehmittel 12 korrelierende Aufnahmen 36 auf, um die Arretiermittel 34 widerzulagern.

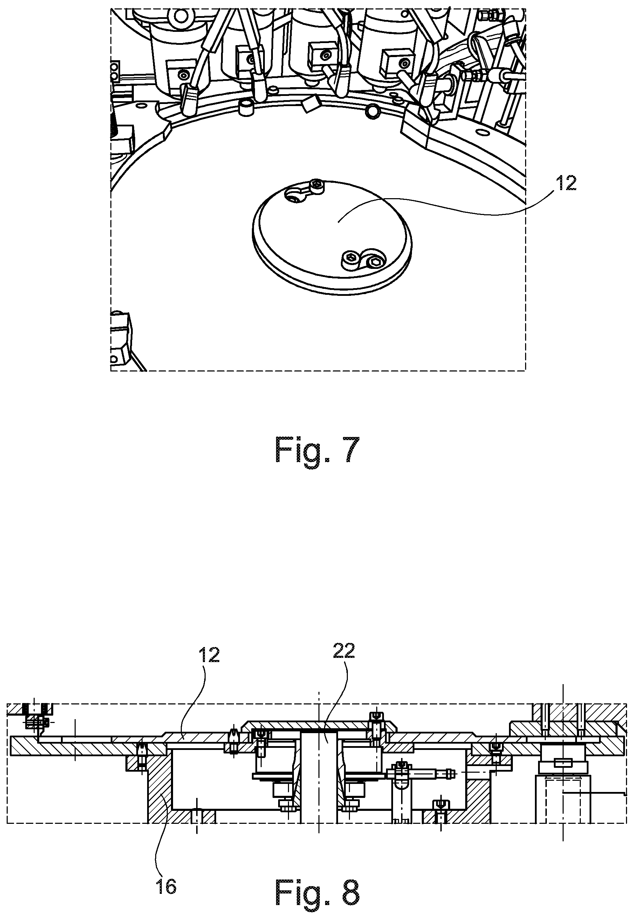

Die Figuren 7 und 8 zeigen vorbekannte Rundschalttischanordnungen. Dabei zeigt Figur 7 eine perspektivische Ansicht und Figur 8 eine Schnittansicht. Vorbekannte Rundschalttischanordnungen verursachen das Lösen und spätere Festschrauben von Schrauben beim Rüsten einer Rundschalttischanordnung einen erheblichen Zeitaufwand. Hierzu ist ein jeweiliges Drehmittel 12 üblicherweise mit einer Aufnahmeanordnung 16 verschraubt. Dies erfordert ein zusätzliches Werkzeug. Konkreter formuliert bedeutet dies, dass das zusätzliche Werkzeug zum Umrüsten der Rundschalttischanordnung verwendet wird, um eine oder mehrere Schrauben zu lösen beziehungsweise zu verschrauben. Dies kostet einerseits Zeit, um das Werkzeug von seinem Lagerplatz zu beschaffen und die entsprechenden Montageschritte durchzuführen. Andererseits muss das Werkzeug mit damit verbundenen Kosten beschafft werden und anschließend griffbereit gelagert werden.

### Bezugszeichenliste

- 10: Rundschalttischanordnung
- 12: Drehmittel
- 14: Zentrieröffnung
- 16: Aufnahmeanordnung
- 18: Bolzenanordnung
- 20: Federsystem
- 22: Bolzenkörper
- 24: Widerlagermittelsystem
- 26: Zentralanordnung
- 28: Ausnehmung
- 30: Widerlagermittel
- 32: Widerlagersystem
- 34: Arretiermittel
- 36: Aufnahme

- D: Drehachse

## Patentansprüche

1. Rundschalttischanordnung (10) mit einer Drehachse (D), aufweisend
- ein um die Drehachse (D) drehbares Drehmittel (12) mit einer zur Drehachse (D) koaxialen Zentrieröffnung (14);
- eine Aufnahmeanordnung (16) mit einer Bolzenanordnung (18),
wobei die Bolzenanordnung (18) aufweist einen entlang der Drehachse (D) mit einem Federsystem (20) bewegbaren Bolzenkörper (22), der derart in einen Rüstzustand oder einen Sperrzustand einstellbar ist,
dass das Drehmittel (12) im Rüstzustand lösbar mit der Aufnahmeanordnung (16) verbunden ist, und
dass das Drehmittel (12) im Sperrzustand unlösbar mit der Aufnahmeanordnung (16) verbunden ist, und dass
der Bolzenkörper (22) der Bolzenanordnung (18) die Zentrieröffnung (14) durchdringt, wobei der Bolzenkörper (22) der Bolzenanordnung (18) und die Zentrieröffnung (14) insbesondere koaxial zueinander angeordnet sind.

2. Rundschalttischanordnung (10) nach Anspruch 1, **dadurch gekennzeichnet, dass** der Bolzenkörper (22) den Rüstzustand durch eine axiale Bewegung in Richtung der Rundschalttischanordnung (10) einnimmt und dass der Bolzenkörper (22) den Sperrzustand durch eine axiale Bewegung entgegen der Richtung der Rundschalttischanordnung (10) einnimmt, wobei das Federsystem (20) den Bolzenkörper (22) vorzugsweise in den Sperrzustand presst.

3. Rundschalttischanordnung (10) nach mindestens einem der vorgenannten Ansprüche, **dadurch gekennzeichnet,**
**dass** der Bolzenkörper (22) mindestens zwei unterschiedliche Außendurchmesser aufweist, wobei der entlang der Drehachse (D) von der Rundschalttischanordnung (10) entfernte erste Außendurchmesser kleiner als der entlang der Drehachse (D) zu der Rundschalttischanordnung (10) weisende zweite Außendurchmesser,
und **dass** die Aufnahmeanordnung (16) ein Widerlagermittelsystem (24) aufweist mit einer zur Drehachse (D) koaxialen Zentralanordnung (26), die umfangsgemäß eine oder mehrere Ausnehmungen (28) aufweist, wobei die Ausnehmungen (28) zur Drehachse (D) radial nach außen einen geringeren Durchschnitt aufweisen als in einem radial inneren Abschnitt, und wobei eine oder mehrere Ausnehmungen (28) jeweils mindestens ein Widerlagermittel (30) aufweisen,
wobei die Widerlagermittel (30) im Sperrzustand des Bolzenkörpers (22) durch den zweiten Außendurchmesser des Bolzenkörpers (22) radial nach außen gepresst sind und im Rüstzustand des Bolzenkörpers (22) im Abschnitt des ersten Außendurchmessers des Bolzenkörpers (22) radiales Spiel aufweisen.

4. Rundschalttischanordnung (10) nach Anspruch 3, **dadurch gekennzeichnet,**
**dass** das Drehmittel (12) koaxial zur Zentrieröffnung (14) ein Widerlagersystem (32) aufweist, das den Bolzenkörper (22) zumindest teilweise umgibt, sodass ein oder mehrere Widerlagermittel (30) im Sperrzustand des Bolzenkörpers (22) derart durch den zweiten Außendurchmesser des Bolzenkörpers (22) radial nach außen gepresst sind, dass sie mit dem Widerlagersystem (32) des Drehmittels (12) verspannen und das Drehmittel (12) fixieren.

5. Rundschalttischanordnung (10) nach Anspruch 4, **dadurch gekennzeichnet,**
**dass** das Widerlagersystem (32) als zumindest teilweise, vorzugsweise vollständig, umlaufende Schräganordnung ausgebildet ist.

6. Rundschalttischanordnung (10) nach einem der Ansprüche 3 bis 5, **dadurch gekennzeichnet,**
**dass** das eine oder mehrere Widerlagermittel (30) als Kugelkörper ausgebildet ist oder sind.

7. Rundschalttischanordnung (10) nach einem der vorgenannten Ansprüche, **dadurch gekennzeichnet,**
**dass** die Aufnahmeanordnung (16) ein oder mehrere Arretiermittel (34) aufweist, um ein unkontrolliertes Komponentenverdrehen um die Drehachse (D) zu vermeiden.

## Claims

1. Rotary indexing table assembly (10) having an axis of rotation (D), comprising
- a rotation means (12) that can be rotated about the axis of rotation (D), having a centring opening (14) coaxial with the axis of rotation (D);
- a receiving assembly (16) having a pin assembly (18),
wherein the pin assembly (18) comprises a pin body (22) that can be moved along the axis of rotation (D) by a spring system (20) and can be set in a set-up state or a blocking state such that in the set-up state the rotation means (12) is detachably connected to the receiving assembly (16), and such that
in the blocking state the rotation means (12) is non-detachably connected to the receiving assembly (16), and such that the pin body (22) of the pin assembly (18) penetrates the centring opening (14), wherein the pin body (22) of the pin assembly (18) and the centring opening (14) are arranged in particular coaxially with respect to one another.

2. The rotary indexing table assembly (10) according to claim 1, **characterised in that** the pin body (22) enters the set-up state by means of an axial movement in the direction of the rotary indexing table assembly (10) and **in that** the pin body (22) enters the blocking state by means of an axial movement in the opposite direction to the rotary indexing table assembly (10), wherein the spring system (20) preferably presses the pin body (22) into the blocking state.

3. The rotary indexing table assembly (10) according to at least one of the preceding claims, **characterised in that**
the pin body (22) comprises at least two different outer diameters, wherein the first outer diameter away from the rotary indexing table assembly (10) along the axis of rotation (D) is smaller than the second outer diameter facing the rotary indexing table assembly (10) along the axis of rotation (D),
and **in that** the receiving assembly (16) comprises an abutment means system (24) having a central assembly (26) coaxial with the axis of rotation (D), which comprises one or more recesses (28) around its circumference, wherein the recesses (28) have a smaller cross section radially outwards with respect to the axis of rotation (D) than in a radially inner portion, and wherein one or more recesses (28) each comprise at least one abutment means (30),
wherein in the blocking state of the pin body (22) the abutment means (30) are pressed radially outwards by means of the second outer diameter of the pin body (22) and in the set-up state of the pin body (22) they have radial play in the portion of the first outer diameter of the pin body (22).

4. The rotary indexing table assembly (10) according to claim 3, **characterised in that**
the rotation means (12) comprises an abutment means system (32) coaxial with the centring opening (14), which at least partially surrounds the pin body (22), such that in the blocking state of the pin body (22) one or more abutment means (30) are pressed radially outwards by means of the second outer diameter of the pin body (22) such that they brace with the abutment means system (32) of the rotation means (12) and fix the rotation means (12) in place.

5. The rotary indexing table assembly (10) according to claim 4, **characterised in that**
the abutment means system (32) is designed as an at least partially, preferably fully, circumferential inclined arrangement.

6. The rotary indexing table assembly (10) according to any one of claims 3 to 5, **characterised in that**
the one or more abutment means (30) is or are designed as spherical bodies.

7. The rotary indexing table assembly (10) according to any one of the preceding claims, **characterised in that**
the receiving assembly (16) comprises one or more locking means (34) to prevent uncontrolled rotation of components about the axis of rotation (D).

## Revendications

1. Ensemble table à transfert circulaire (10) comportant un axe de rotation (D), présentant
- un moyen de rotation (12) pouvant tourner autour de l'axe de rotation (D) comprenant une ouverture de centrage (14) coaxiale à l'axe de rotation (D) ;
- un ensemble de réception (16) comprenant un ensemble goujon (18),
l'ensemble goujon (18) présentant un corps de goujon (22) mobile le long de l'axe de rotation (D) avec un système de ressort (20), qui peut être placé dans un état de mise en place ou un état verrouillé,
de façon que le moyen de rotation (12) soit relié de manière amovible dans l'état de mise en place à l'ensemble de réception (16), et
de façon que le moyen de rotation (12) soit relié à demeure dans l'état verrouillé à l'ensemble de réception (16), et de façon que le corps de goujon (22) de l'ensemble goujon (18) traverse l'ouverture centrale (14), le corps de goujon (22) de l'ensemble goujon (18) et l'ouverture centrale (14) étant en particulier agencés coaxialement l'un par rapport à l'autre.

2. Ensemble table à transfert circulaire (10) selon la revendication 1, **caractérisé en ce que** le corps de goujon (22) prend l'état de mise en place par un mouvement axial dans la direction de l'ensemble table à transfert circulaire (10) et **en ce que** le corps de goujon (22) prend l'état verrouillé par un mouvement axial dans la direction opposée à la direction de l'ensemble table à transfert circulaire (10), le système de ressort (20) comprimant le corps de goujon (22) de préférence dans l'état verrouillé.

3. Ensemble table à transfert circulaire (10) selon au moins l'une quelconque des revendications précédentes, **caractérisé en ce que**
le corps de goujon (22) présente au moins deux diamètres extérieurs différents, le premier diamètre extérieur éloigné de l'ensemble table à transfert circulaire (10) le long de l'axe de rotation (D) étant inférieur au second diamètre extérieur orienté vers l'ensemble table à transfert circulaire (10) le long de l'axe de rotation (D),
et **en ce que** l'ensemble de réception (16) présente un système de moyens de butée (24) avec un agencement central (26) coaxial à l'axe de rotation (D), qui présente sur la circonférence un ou plusieurs évidements (28), les évidements (28) présentant radialement vers l'extérieur par rapport à l'axe de rotation (D) un diamètre inférieur à celui dans une section radialement intérieure, et un ou plusieurs évidements (28) présentant respectivement au moins un moyen de butée (30),
les moyens de butée (30) étant comprimés radialement vers l'extérieur par le second diamètre extérieur du corps de goujon (22) dans l'état verrouillé du corps de goujon (22) et présentant un jeu radial dans la section du premier diamètre extérieur du corps de goujon (22) dans l'état de mise en place du corps de goujon (22).

4. Ensemble table à transfert circulaire (10) selon la revendication 3, **caractérisé en ce que** le moyen de rotation (12) présente, coaxialement à l'ouverture centrale (14), un système de butée (32) qui entoure au moins à certains endroits le corps de goujon (22), de façon qu'un ou plusieurs moyens de butée (30) soient comprimés radialement vers l'extérieur par le second diamètre extérieur du corps de goujon (22) dans l'état verrouillé du corps de goujon (22), de façon à se serrer avec le système de butée (32) du moyen de rotation (12) et à fixer le moyen de rotation (12).

5. Ensemble table à transfert circulaire (10) selon la revendication 4, **caractérisé en ce que** le système de butée (32) est réalisé sous la forme d'un ensemble oblique au moins à certains endroits, de préférence entièrement, périphérique.

6. Ensemble table à transfert circulaire (10) selon l'une des revendications 3 à 5, **caractérisé en ce**
**qu'**un ou plusieurs moyens de butée (30) sont conçus comme des corps sphériques.

7. Ensemble table à transfert circulaire (10) selon au moins l'une quelconque des revendications précédentes, **caractérisé en ce que**
l'ensemble de réception (16) présente un ou plusieurs moyens d'arrêt (34) pour éviter une rotation incontrôlée des composants autour de l'axe de rotation (D).
